(19) Europäisches Patentamt
European Patent Office
Office européen des brevets

(11) **EP 4 686 915 A1**

(12) **EUROPÄISCHE PATENTANMELDUNG**

(43) Veröffentlichungstag:
**04.02.2026 Patentblatt 2026/06**

(21) Anmeldenummer: **25181332.5**

(22) Anmeldetag: **06.06.2025**

(51) Internationale Patentklassifikation (IPC):
*G01D 5/244* (2006.01)   *G01D 5/347* (2006.01)

(52) Gemeinsame Patentklassifikation (CPC):
**G01D 5/24461; G01D 5/34792**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **01.08.2024 DE 202024104318 U**

(71) Anmelder: **Leuze electronic GmbH + Co. KG**
**73277 Owen/Teck (DE)**

(72) Erfinder:
• **Linsenmayer, Jörg**
**73272 Neidlingen (DE)**
• **Sanzi, Dr., Friedrich**
**73230 Kirchheim/Teck (DE)**

(74) Vertreter: **Ruckh, Rainer Gerhard**
**Patentanwaltskanzlei Ruckh**
**Jurastraße 1**
**73087 Bad Boll (DE)**

(54) **SENSORANORDNUNG**

(57) Die Erfindung betrifft eine Sensoranordnung (15) mit einem von einer Anordnung von Marken gebildeten Positionsmaßsystem (17). In jeder Marke ist deren Position innerhalb des Positionsmaßsystems (17) kodiert. Mit einem relativ zum Positionsmaßsystem (17) beweglich angeordneten optischen Sensor (1), welcher einen Lichtstrahlen (3) emittierenden Sender (4), einen Lichtstrahlen (3) empfangenden Empfänger (10) und eine Auswerteeinheit (11) zur Auswertung von Empfangssignalen des Empfängers (10) aufweist, werden mit dem optischen Sensor (1) Marken innerhalb eines Lesefelds erfasst. In der Auswerteeinheit (11) werden durch Erfassen einer in einer Marke kodierten Position und Erfassen der Lage der Marke innerhalb des Lesefelds ein Positionsmesswert generiert. Die Auswerteeinheit (11) weist zwei über eine Datenverbindung (14) verbundene Rechnereinheiten (12a, 12b) auf. Das Empfangssignal wird jeder Rechnereinheit (12a, 12b) über eine Eingangsschaltung (13a, 13b) zugeführt. In jeder Rechnereinheit (12a, 12b) wird für eine erfasste Marke das Empfangssignal ausgewertet und daraus ein Positionsmesswert ($p_A, p_B$) bestimmt. Eine Rechnereinheit (12a, 12b) sendet deren Positionsmesswerte ($p_A$ oder $p_B$) an die andere Rechnereinheit (12a, 12b), wo die beiden Positionsmesswert ($p_A, p_B$) miteinander verglichen werden. Bei Übereinstimmung der Positionsmesswerte Positionsmesswert ($p_A, p_B$) innerhalb einer vorgegebenen Toleranzgrenze gibt der optische Sensor (1) einen gültigen Ausgabepositionsmesswert aus. Andernfalls geht der optische Sensor (1) in einen sicheren Zustand über.

**Fig. 1**

**Beschreibung**

Die Erfindung betrifft eine Sensoranordnung mit einem von Marken gebildeten Positionsmaßsystem und einem relativ zu diesem beweglich angeordneten optischen Sensor.

In den Marken sind deren Positionen, insbesondere Absolutpositionen kodiert. Durch Lesen der Marken und durch Bestimmen der Lage der jeweiligen Marke innerhalb eines Lesefelds bestimmt der optische Sensor dessen Position relativ zum Positionsmaßsystem.

Eine derartige Sensoranordnung ist aus der DE 102 11 779 B1 bekannt. Die dort beschriebene Sensoranordnung weist einen optischen Sensor mit einem Sendelichtstrahlen emittierenden Sender, einem Empfangslichtstrahlen empfangenden Empfänger, Mitteln zur Führung der Sendelichtstrahlen innerhalb eines Abtastbereichs und einer Auswerteeinheit zur Auswertung der am Ausgang des Empfängers anstehenden Empfangssignale auf. Mit dem optischen Sensor erfolgt die Erfassung von Marken, welche ein Positionsmaßsystem bilden. Durch die Erfassung von Marken des Positionsmaßsystems zu zwei unterschiedlichen Zeitpunkten wird zudem die Geschwindigkeit des optischen Sensors relativ zum Positionsmaßsystem bestimmt.

Der optische Sensor ist besonders vorteilhaft an einem Fahrzeug angebracht, wobei das Positionsmaßsystem stationär an der Fahrbahn angeordnet ist, entlang derer das Fahrzeug bewegt wird. Prinzipiell kann auch ein Positionsmaßsystem bezüglich eines stationär angeordneten optischen Sensors bewegt werden. Durch die fortlaufende Erfassung der Marken des Positionsmaßsystems werden in dem optischen Sensor kontinuierlich die aktuellen Geschwindigkeits- und Positionsmesswerte ermittelt und an die Steuerung des Fahrzeuges übermittelt. In der Steuerung können diese Messwerte ohne weitere Auswertung und insbesondere ohne jeden Synchronisationsaufwand direkt zur Steuerung des Fahrzeugs verwendet werden. Insbesondere kann in der Steuerung die Einhaltung von vorgegebenen Geschwindigkeitsprofilen für das Fahrzeug fortlaufend kontrolliert werden. Zusammen mit den aktuellen Informationen über die Position des Fahrzeugs kann dieses reproduzierbar und punktgenau auf vorgegebene Sollpositionen eingefahren werden.

Die DE 10 2005 047 658 A1 betrifft eine Sensoranordnung mit einem von einer Anordnung von Marken gebildeten Positionsmaßsystem und mit einem optischen Sensor zur Erfassung der Marken des Positionsmaßsystems. Der optische Sensor und das Positionsmaßsystem sind relativ zueinander beweglich angeordnet. Dem optischen Sensor ist ein Sensorelement fest zugeordnet, mittels dessen die Marken des Positionsmaßsystems oder Markierungen eines dem Positionsmaßsystem fest zugeordneten Maßsystems erfassbar sind. Die vom optischen Sensor und vom Sensorelement generierten Signale werden in einem Auswertesystem ausgewertet.

Der optische Sensor und das Sensorelement bilden eine diversitäre, zweikanalige Sensorstruktur, die den Einsatz der Sensoranordnung in sicherheitstechnischen Applikationen ermöglicht.

Zwar können bei dieser Sensoranordnung Fehler in der Positionsbestimmung aufgedeckt werden, jedoch wird hierzu eine aufwändige Sensorik benötigt.

Der Erfindung liegt die Aufgabe zugrunde eine Sensoranordnung bereitzustellen, die eine hohe Fehlersicherheit und gleichzeitig eine hohe Verfügbarkeit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Sensoranordnung mit einem von einer Anordnung von Marken gebildeten Positionsmaßsystem. In jeder Marke ist deren Position innerhalb des Positionsmaßsystems kodiert. Mit einem relativ zum Positionsmaßsystem beweglich angeordneten optischen Sensor, welcher einen Lichtstrahlen emittierenden Sender, einen Lichtstrahlen empfangenden Empfänger und eine Auswerteeinheit zur Auswertung von Empfangssignalen des Empfängers aufweist, werden mit dem optischen Sensor Marken innerhalb eines Lesefelds erfasst. In der Auswerteeinheit werden durch Erfassen einer in einer Marke kodierten Position und Erfassen der Lage der Marke innerhalb des Lesefelds ein Positionsmesswert generiert. Die Auswerteeinheit weist zwei über eine Datenverbindung verbundene Rechnereinheiten auf. Das Empfangssignal wird jeder Rechnereinheit über eine Eingangsschaltung zugeführt. In jeder Rechnereinheit wird für eine erfasste Marke das Empfangssignal ausgewertet und daraus ein Positionsmesswert bestimmt. Eine Rechnereinheit sendet deren Positionsmesswerte an die andere Rechnereinheit, wo die beiden Positionsmesswerte miteinander verglichen werden. Bei Übereinstimmung der Positionsmesswerte innerhalb einer vorgegebenen Toleranzgrenze gibt der optische Sensor einen gültigen Ausgabepositionsmesswert aus. Andernfalls geht der optische Sensor in einen sicheren Zustand über.

Die Funktionsweise der erfindungsgemäßen Sensoranordnung ist derart, dass mit dem optischen Sensor Marken innerhalb eines Lesefelds erfasst werden können.

Vorteilhaft weist der optische Sensor eine Ablenkeinheit auf, mittels derer die Lichtstrahlen periodisch innerhalb des Lesefelds geführt sind.

Dabei ist das Lesefeld durch zwei beidseits eines Referenzpunkts liegenden Lesefeldgrenzen $\Delta l$ begrenzt.

Die Lichtstrahlen können mit der Ablenkeinheit periodisch innerhalb eines Abtastbereichs geführt werden, wobei das Lesefeld ein Ausschnitt des Abtastbereichs ist.

Das Positionsmaßsystem besteht aus einer regelmäßigen, insbesondere linearen Anordnung von Marken, insbesondere Barcodes, in welchen die Positionen, insbesondere Absolutpositionen der Marken innerhalb des Positionsmaßsystems kodiert sind.

Der optische Sensor und das Positionsmaßsystem sind relativ zueinander beweglich angeordnet. Insbesondere kann der optische Sensor auf einem Fahrzeug installiert sein, das am Positionsmaßsystem vorbeibewegt wird.

Im optischen Sensor wird durch Erfassen, d.h. Dekodieren einer Marke und Bestimmen der Lage dieser Marke innerhalb des Lesefelds die Position relativ zum Positionsmaßsystem bestimmt. Der optische Sensor gibt diese Position als Ausgabepositionsmesswert aus insbesondere an eine Steuerung des Fahrzeugs, so dass das Fahrzeug relativ zum Positionsmaßsystem positioniert werden kann.

Erfindungsgemäß weist der optische Sensor zur Auswertung von Empfangssignalen des Empfängers eine redundante zweikanalige Auswerteeinheit auf, bestehend aus zwei über eine Datenverbindung verbundene Rechnereinheiten, die vorzugsweise identisch ausgebildet sind.

Über die vorzugsweise leitungsgebundene Datenverbindung erfolgt ein bidirektionaler Datenaustausch, so dass sich die Rechnereinheiten gegenseitig kontrollieren können.

Vorteilhaft ist jede Rechnereinheit von einem DSP (Digital Signalprozessor) und/oder einem ARM (Advanced RISC Machine)-Prozessor gebildet, wobei RISC = reduced instruction set computer.

Durch die redundante Ausbildung in Form mehrerer sich gegenseitig überwachender Rechnereinheiten der Auswerteeinheit weist diese einen fehlersicheren Aufbau auf, so dass der optische Sensor in sicherheitstechnischen Applikationen eingesetzt werden kann.

Ein wesentlicher Aspekt der Erfindung besteht in einer fehlersicheren Positionsbestimmung anhand der Empfangssignale des Empfängers des optischen Sensors, indem in jeder Rechnereinheit aus dem Empfangssignal ein Positionsmesswert $p_A$, $p_B$ bestimmt wird, wobei diese Positionsbestimmungen in beiden Rechnereinheiten auf gleicher Weise erfolgen.

Das bei der Erfassung einer Marke hierbei im Empfänger generierte Empfangssignal wird gleichzeitig beiden Rechnereinheiten der Auswerteeinheit zugeführt. Jede Rechnereinheit weist hierzu eine Eingangsschaltung auf, die insbesondere einen Analog-Digital-Wandler aufweist. Die Eingangsschaltungen sind wie die Rechnereinheiten identisch ausgebildet.

Trotz der Identität der Rechnereinheiten und der Eingangsschaltungen und trotz der identischen Auswertung des Empfangssignals in den Rechnereinheiten können in den Rechnereinheiten unterschiedliche Positionsmesswerte $p_A$, $p_B$ bestimmt werden.

Dies beruht darauf, dass die Lage der Marke im Lesefeld von den Rechnereinheiten unterschiedlich bewertet wird, was durch leicht unterschiedliche Taktraten oder durch leichte Schwankungen der Taktraten der Rechnereinheiten und Bauteiltoleranzen in den Elektronikkomponenten wie der Analog-Digital-Wandler bewirkt sein kann. Diese Unterschiede der Taktraten wirken sich auf die Auswertung in den Rechnereinheiten besonders stark aus, wenn die erfasste Marke nicht im Zentrum des Lesefelds, sondern am Rand des Lesefelds liegt. Dort können Abbildungsfehler einer dem Empfänger vorgeordneten Empfangsoptik zu Signalverzerrungen des Empfangssignals führen.

Erfindungsgemäß werden derartige Fehler dadurch aufgedeckt bzw. korrigiert, dass bei Erfassung einer Marke eine Rechnereinheit deren Positionsmesswert $p_A$ oder $p_B$ an die andere Rechnereinheit sendet, wobei die sendende und empfangende Rechnereinheit beliebig wählbar ist und sich dies auch ändern kann.

In der die Positionsmesswerte $p_A$ oder $p_B$ empfangenden Rechnereinheit erfolgt ein Vergleich der beiden Positionsmesswerte $p_A$, $p_B$.

Stimmen die Positionsmesswerte $p_A$, $p_B$ innerhalb einer vorgegebenen Toleranzgrenze überein, wird aus diesen ein Ausgabepositionsmesswert berechnet und vom optischen Sensor ausgegeben.

Vorteilhaft ist der Ausgabepositionsmesswert der arithmetische Mittelwert der Positionsmesswerte $p_A$, $p_B$. Auch kann nur einer der Positionswerte $p_A$, $p_B$ als Positionswert ausgewählt werden.

Der Ausgabepositionsmesswert wird an eine externe Einheit, insbesondere an eine Steuerung eines Fahrzeugs, auf dem der optische Sensor installiert ist, ausgegeben, wo die Ausgabepositionsmesswerte zu Positionierungsaufgaben verwendet werden können.

Stimmen die Positionsmesswerte $p_A$, $p_B$ nicht innerhalb der vorgegebenen Toleranzgrenze überein, so geht der optische Sensor in einen sicheren Zustand über.

Vorteilhaft gibt der optische Sensor im sicheren Zustand eine Meldung aus, die einen ungültigen Positionsmesswert $p_A$, $p_B$ signalisiert.

Das Störsignal wird in die externe Einheit, insbesondere die Steuerung des Fahrzeugs eingelesen, so dass die externe Einheit eine Sicherheitsfunktion auslösen kann. Insbesondere besteht die Sicherheitsfunktion darin, dass das Fahrzeug angehalten wird.

Prinzipiell könnte der optische Sensor selbst dadurch in einen sicheren Zustand übergehen, in dem dieser abgeschaltet wird.

Durch Vorgabe der Toleranzgrenze kann die Verfügbarkeit der Sensoranordnung, insbesondere des optischen Sensors gezielt vorgegeben und insbesondere erhöht werden, da nicht gefordert wird, dass die beiden Positionsmesswerte exakt übereinstimmen müssen.

Vorteilhaft ist die Toleranzgrenze durch einen Schwellwert bestimmt. Mit dem Schwellwert wird die Betragsdifferenz der beiden Positionsmesswerte $p_A$, $p_B$ bewertet.

Gemäß einer vorteilhaften Weiterbildung der Erfindung wird für die erfasste Marke in jeder Rechnereinheit deren Abstand $\Delta d_A$, $\Delta d_B$ zum Referenzpunkt bestimmt und als Kriterium für einen gültigen Ausgabepositionsmesswert herangezogen.

Die Abstände $\Delta d_A$, $\Delta d_B$ stellen somit neben den Positionsmesswerten $p_A$, $p_B$ weitere Gültigkeitskriterien bei der Positionsbestimmung dar, wobei diese auch separate Ausgabegrößen des optischen Sensors bilden können.

Die Auswertung erfolgt dann derart, dass der optische Sensor einen gültigen Ausgabepositionsmesswert ausgibt, wenn die Positionsmesswerte $p_A$, $p_B$ innerhalb einer vorgegebenen Toleranzgrenze übereinstimmen und wenn wenigstens in einer Rechnereinheit die erfasste Marke innerhalb der Lesefeldgrenzen erkannt wird.

Dabei wird die Betragsdifferenz der Positionsmesswerte $p_A$, $p_B$ mit einem die Toleranzgrenze bestimmenden Schwellwert bewertet. Die Größe des Schwellwerts hängt davon ab ob in jeder Rechnereinheit, nur in einer Rechnereinheit oder in keiner Rechnereinheit der Abstand $\Delta d_A$ und $\Delta d_B$ innerhalb der Lesefeldgrenzen erkannt wird.

Insbesondere wird die Betragsdifferenz der Positionsmesswerte $p_A$, $p_B$ mit einem kleinsten Schwellwert bewertet, wenn beide Abstände $\Delta d_A$ und $\Delta d_B$ innerhalb der Lesefeldgrenzen liegen. Die Betragsdifferenz der Positionsmesswerte $p_A$, $p_B$ wird mit einem mittleren Schwellwert bewertet, wenn einer der Abstände $\Delta d_A$ und $\Delta d_B$ innerhalb der Lesefeldgrenzen liegt. Die Betragsdifferenz der Positionsmesswerte $p_A$, $p_B$ wird mit einem größten Schwellwert bewertet, wenn beide Abstände $\Delta d_A$, $\Delta d_B$ außerhalb der Lesefeldgrenzen liegen.

Diese Auswertung ist daran angepasst, dass die Wahrscheinlichkeit eines Fehlers in der Positionsbestimmung umso größer ist, je weiter die erfasste Marke am Rand des Lesefelds liegt oder sogar über das Lesefeld herausragt.

Durch diese spezifische Auswertung wird die Verfügbarkeit der Sensoranordnung und insbesondere des optischen Sensors weiter erhöht.

Gemäß einer vereinfachten Variante der Auswertung sind die Abstände $\Delta d_A$, $\Delta d_B$ in mehreren Klassen unterteilt. Durch den optischen Sensor werden abhängig von der Zugehörigkeit der Abstände $\Delta d_A$, $\Delta d_B$ zu einer Klasse unterschiedliche Auswertungen der Positionsmesswerte $p_A$, $p_B$ durchgeführt.

Dabei geht in einem äußeren, über die Lesefeldgrenzen hinausgehenden Bereich der Abstände $\Delta d_A$, $\Delta d_B$ der optische Sensor in den sicheren Zustand über, wenn die Betragsdifferenz der Positionsmesswerte $p_A$, $p_B$ einen Schwellwert überschreitet.

Weiterhin wird in einem zentralen Bereich der Abstände $\Delta d_A$ und $\Delta d_B$, innerhalb dessen der Referenzpunkt liegt, ein außerhalb der Toleranzgrenze liegender Positionsmesswert toleriert.

Schließlich generiert in einem mittleren, innerhalb der Lesefeldgrenzen liegenden Bereich der Abstände $\Delta d_A$, $\Delta d_B$ der optische Sensor ein Warnsignal, wenn die Betragsdifferenz der Positionsmesswerte $p_A$, $p_B$ einen Schwellwert überschreitet.

Auch diese Auswertungen tragen dem Umstand Rechnung, dass die Wahrscheinlichkeit von fehlerhaften Positionsbestimmungen minimal ist, wenn die erfasste Marke im Zentrum des Lesefelds liegt und maximal, wenn die Marke an der Lesefeldgrenze liegt.

Die Erfindung wird im Folgenden anhand der Zeichnungen erläutert. Es zeigen:

Figur 1:     Schematische Darstellung eines optischen Sensors zur Erfassung von Marken.

Figur 2:     Ausführungsbeispiel der erfindungsgemäßen Sensoranordnung mit dem optischen Sensor gemäß Figur 1.

Figur 3:     Teildarstellung der Sensoranordnung gemäß Figur 2 bei Erfassung einer Marke mittels des optischen Sensors innerhalb eines Lesefelds.

Figur 4:     Anordnung gemäß Figur 3 mit einer Einteilung des Lesefelds in drei Bereiche: a) Erfassung einer Marke in einem inneren Bereich. b) Erfassung einer Marke in einem mittleren Bereich. c) Erfassung einer Marke in einem äußeren Bereich.

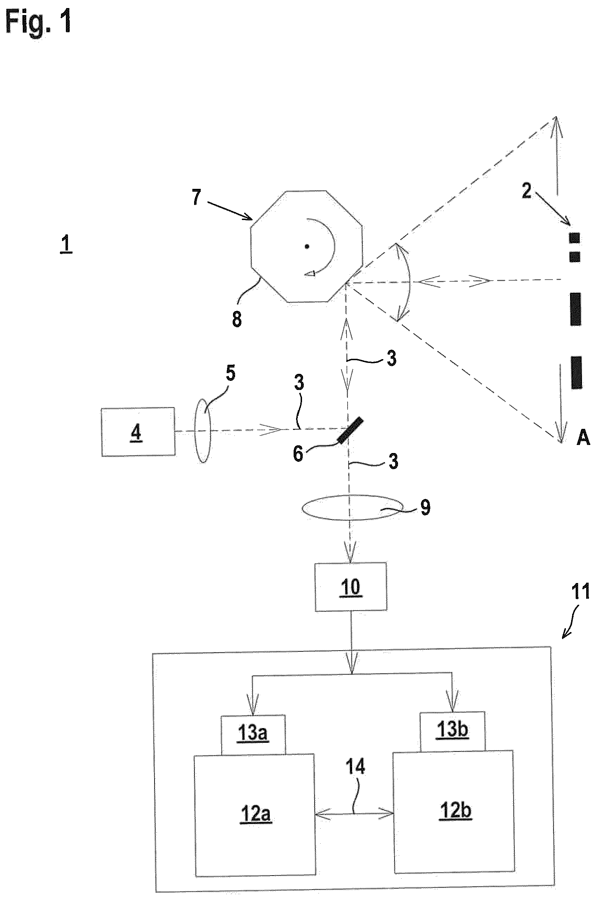

In Figur 1 ist der prinzipielle Aufbau eines optischen Sensors 1 zur Erfassung von Marken dargestellt. Der optische Sensor 1 ist im vorliegenden Beispiel als Barcodelesegerät ausgebildet. Entsprechend sind die Marken, die allgemein definierte Kontrastmuster aufweisen, im vorliegenden Fall als Barcodes 2 ausgebildet, welche aus einer Folge von dunklen und hellen Strichelementen definierter Länge und Breite bestehen.

Der optische Sensor 1 weist einen Lichtstrahlen 3 emittierenden Sender 4, vorzugsweise eine Laserdiode, sowie eine dem Sender 4 vorgeordnete Sendeoptik 5 auf. Die Sendeoptik 5 dient zur Fokussierung der vom Sender 4 emittierten Lichtstrahlen 3. Die fokussierten Lichtstrahlen 3 werden über einen Umlenkspiegel 6 auf eine Ablenkeinheit 7, die im vorliegenden Ausführungsbeispiel von einem rotierenden Polygonspiegelrad gebildet ist, geführt. Das Polygonspiegelrad weist eine vorgegebene Anzahl von identisch ausgebildeten Spiegelflächen 8 auf. Die Lichtstrahlen 3 werden an den Spiegelflächen 8 abgelenkt und periodisch innerhalb eines Abtastbereichs A geführt.

Die Lichtstrahlen 3 werden am Barcode 2 reflektiert und von dort über die Ablenkeinheit 7 und eine Empfangsoptik 9 zu einem Empfänger 10 geführt, der von einer Photodiode gebildet sein kann.

Die Empfangssignale des Empfängers 10 werden einer Auswerteeinheit 11 zugeführt. Die Auswerteeinheit 11 ist zweikanalig ausgebildet und weist zwei identisch ausgebildete Rechnereinheiten 12a, 12b auf, die jeweils eine Eingangsschaltung 13a, 13b aufweisen. Auch die Eingangsschaltungen 13a, 13b sind identisch ausgebildet. Die Rechnereinheiten 12a, 12b sind über eine Datenverbindung 14 verbunden, über welche ein bidirektionaler Datenaustausch erfolgen kann.

Vorteilhaft ist jede Rechnereinheit 12a, 12b von einem DSP (Digital Signalprozessor) und/oder einem ARM (Advanced RISC Machine)-Prozessor gebildet.

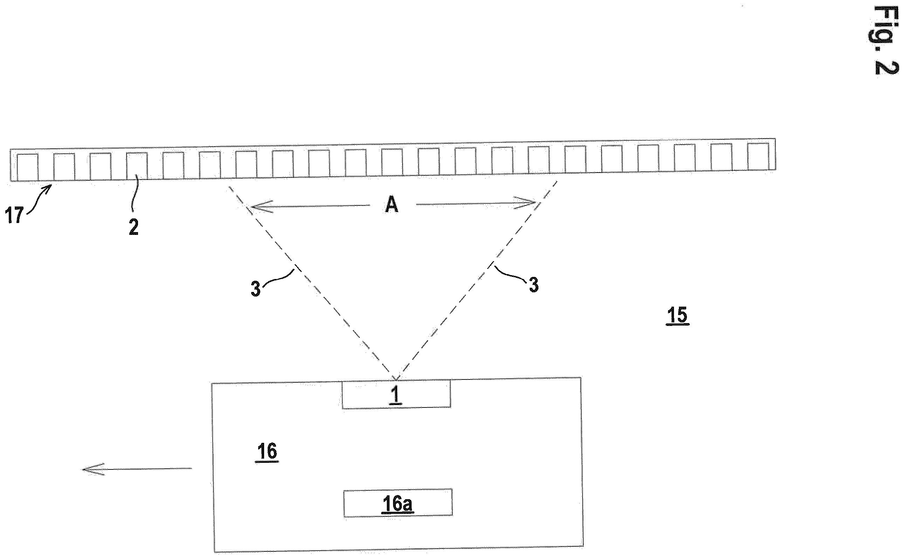

Figur 2 zeigt ein Ausführungsbeispiel der erfindungsgemäßen Sensoranordnung 15 mit dem optischen Sensor 1.

Der optische Sensor 1 ist auf einem Fahrzeug 16 installiert, wobei das Fahrzeug 16 ein fahrerloses Transportfahrzeug ist, das von einer Steuerung 16a gesteuert wird.

Zudem umfasst die Sensoranordnung 15 ein stationär angeordnetes Positionsmaßsystem 17 mit einer Linearanordnung von Marken, d.h. Barcodes 2, in welchen jeweils die Absolutpositionen der einzelnen Marken kodiert sind.

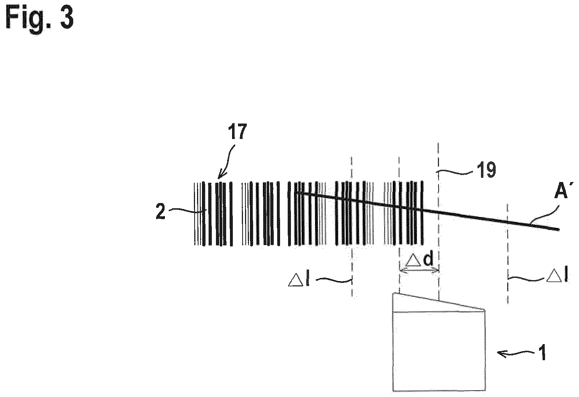

Figur 3 zeigt das Prinzip der Erfassung von Marken, die zur Positionsbestimmung des optischen Sensors 1 und damit des Fahrzeugs 16 relativ zum Positionsmaßsystem 17 dient.

Figur 3 zeigt die Abtastlinie A' entlang derer die Lichtstrahlen 3 bei Abtastung des Abtastbereichs A periodisch geführt sind.

Mit dem optischen Sensor 1 werden dabei Marken innerhalb eines Lesefelds erfasst, das durch Lesefeldgrenzen $\Delta l$ begrenzt ist. Die Lesefeldgrenzen $\Delta l$ liegen symmetrisch zu einem Referenzpunkt 19 bzw. einer Referenzlinie.

Durch die zweikanalige Ausbildung der Auswerteeinheit 11 weist diese einen fehlersicheren Aufbau auf, der einen Einsatz des optischen Sensors 1 in sicherheitstechnischen Applikationen ermöglicht.

Insbesondere erfolgt in der Auswerteeinheit 11 eine zweikanalige Positionsbestimmung. Hierzu wird ein bei Erfassung einer Marke im Empfänger 10 generiertes Empfangssignal gleichzeitig beiden Rechnereinheiten 12a, 12b der Auswerteeinheit 11 zugeführt.

Zur Positionsbestimmung einer Marke wird deren Absolutposition im Positionsmaßsystem 17 durch Dekodieren des in der Marke vorhandenen Codes bestimmt. Zudem wird die Lage der Marke innerhalb des Lesefelds bestimmt.

Trotz der Identität der Rechnereinheiten 12a, 12b und der Eingangsschaltungen 13a, 13b und trotz der identischen Auswertung des Empfangssignals in den Rechnereinheiten 12a, 12b können in den Rechnereinheiten 12a, 12b unterschiedliche Positionsmesswerte $p_A$, $p_B$ erhalten werden.

Dies beruht darauf, dass die Lage der Marke im Lesefeld von den Rechnereinheiten 12a, 12b unterschiedlich bewertet wird, was durch leicht unterschiedliche Schwankungen der Taktraten der Rechnereinheit 12a, 12b und Elektronikkomponenten wie den Analog-Digital-Wandler bedingt sein kann. Diese Unterschiede der Taktraten wirken sich auf die Auswertung in den Rechnereinheiten 12a, 12b besonders stark aus, wenn die erfasste Marke nicht im Zentrum des Lesefelds sondern am Rand des Lesefelds liegt. Dort können Abbildungsfehler einer dem Empfänger 10 vorgeordneten Empfangsoptik 9 zu Signalverzerrungen des Empfangssignals führen.

Erfindungsgemäß werden derartige Fehler dadurch aufgedeckt bzw. korrigiert, dass bei Erfassung einer Marke eine Rechnereinheit 12a oder 12b deren Positionsmesswerte $p_A$ oder $p_B$ an die andere Rechnereinheit 12b oder 12a sendet, wobei die sendende und empfangende Rechnereinheit 12a, 12b beliebig wählbar ist und sich dies auch ändern kann.

Im vorliegenden Fall übermittelt die Rechnereinheit 12b ihren Positionsmesswert $p_B$ an die Rechnereinheit 12a, die die Positionsmesswerte $p_A$, $p_B$ vergleicht.

Dabei wird folgende Vergleichsfunktion $g(p_A, p_B)$ ermittelt.

$$v = g(p_A, p_B) = \begin{cases} 1 \text{ für } |p_A - p_B| \leq t_p \\ 0 \text{ sonst} \end{cases} \qquad \text{Gleichung (1)}$$

In Gleichung (1) ist $t_p$ eine Toleranzgrenze definierender Schwellwert für eine zulässige Positionsdifferenz der beiden Rechnereinheiten 12a, 12b d.h. die Vergleichsfunktion $g(p_A, p_B)$ liefert den Wert 1, wenn die beiden Positionswerte $p_A$ und $p_B$ näherungsweise gleich sind. Ansonsten wird der Wert 0 erhalten. Danach bestimmt die Rechnereinheit 12a mit Hilfe der Funktion $f(p_A, p_B, v)$ den Ausgabepositionswert p, welcher über eine Schnittstelle ausgegeben wird. Die Funktion $f(p_A, p_B, v)$ könnte beispielsweise wie folgt lauten:

$$p = f(p_A, p_B, v) = \begin{cases} \frac{p_A + p_B}{2} \text{ für } v = 1 \\ \text{"sicherer Zustand" sonst} \end{cases} \qquad \text{Gleichung (2)}$$

Ein Ausgabepositionswert p = "sicherer Zustand" bedeutet dabei, dass der optische Sensor 1 in einen sicheren Zustand übergeht.

Der im fehlerfreien Fall erhaltene Ausgabepositionsmesswert $\frac{p_A + p_B}{2}$ wird an die Steuerung 16a des Fahrzeugs 16 übertragen und dort zur Positionierung des Fahrzeugs 16 verwendet.

Vorteilhaft gibt der optische Sensor 1 im sicheren Zustand eine Meldung aus, die einen ungültigen Positionsmesswert $p_A$, $p_B$ signalisiert.

Das Störsignal wird in die externe Einheit, insbesondere die Steuerung 16a des Fahrzeugs 16 eingelesen, so dass die externe Einheit eine Sicherheitsfunktion auslösen kann. Insbesondere besteht die Sicherheitsfunktion darin, dass das Fahrzeug 16 angehalten wird.

Gemäß einer vorteilhaften Weiterbildung wird zusätzlich zur Positionsbestimmung einer Marke deren Abstand $\Delta d$ zum Referenzpunkt 19 ausgewertet (Figur 3).

Diese Abstandsbestimmung erfolgt in beiden Rechnereinheiten 12a, 12b. Aufgrund der vorgenannten Fehlerquellen werden in den Rechnereinheiten 12a, 12b Abstände $\Delta d_A$, $\Delta d_B$ erhalten, die verschieden sein können.

Von der Rechnereinheit 12b werden dann die Werte $p_B$, $\Delta d_B$ ermittelt und an die Rechnereinheit 12a übermittelt, wo diese Werte mit den entsprechenden Werten $p_A$, $\Delta d_A$ verglichen werden.

Dadurch wird beispielsweise folgende Vergleichsfunktion erhalten.

$$v = g(p_A, p_B, \Delta d_A, \Delta d_B) = \begin{cases} 1 \text{ für } |p_A - p_B| \le t_{p,1}, \Delta d_A \le \Delta l \text{ und } \Delta d_B \le \Delta l \\ 1 \text{ für } |p_A - p_B| \le t_{p,2}, \Delta d_A \le \Delta l \text{ und } \Delta d_B > \Delta l \\ 1 \text{ für } |p_A - p_B| \le t_{p,2}, \Delta d_A > \Delta l \text{ und } \Delta d_B \le \Delta l \\ 2 \text{ für } |p_A - p_B| \le t_{p,3}, \Delta d_A > \Delta l \text{ und } \Delta d_B > \Delta l \\ 0 \text{ sonst} \end{cases} \text{Gleichung (3)}$$

In Gleichung (3) gilt für die Schwellwerte $t_p = t_{p,1} \le t_{p,2} \le t_{p,3}$. Durch die Hinzunahme der Auswertung der Abstände $\Delta d_A$ und $\Delta d_B$ erfolgt eine Überprüfung der Lage der Marke im Lesefeld. Durch die Verwendung unterschiedlicher Schwellen je nach Lage im Lesefeld entsprechend der beispielhaften Realisierung der Vergleichsfunktion nach Gleichung (3) wird die Geräteverfügbarkeit erhöht. Die Funktion $f(p_A, p_B, v)$ kann passend dazu beispielhaft wie folgt realisiert sein:

$$p = f(p_A, p_B, v) = \begin{cases} \frac{p_A + p_B}{2} \text{ für } v = 1 \\ 0 \text{ für } v = 2 \\ \text{"sicherer Zustand" sonst} \end{cases} \qquad \text{Gleichung (4)}$$

Ein Ausgabepositionswert p = 0 bedeutet einen ungültigen Positionswert. Das Gerät befindet sich in diesem Fall nicht im sicheren Zustand.

Ein Ausgabepositionsmesswert für $v = 1$ wird zur Positionierung des Fahrzeugs 16 verwendet.

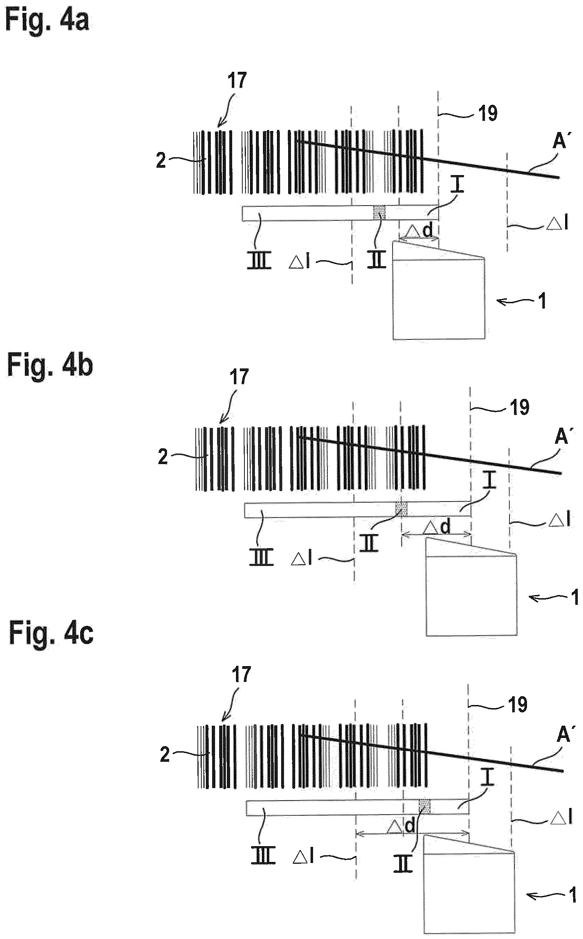

Die Figuren 4a bis 4c zeigen ein weiteres Ausführungsbeispiel der Positionsbestimmung von Marken innerhalb des Lesefelds.

Das Lesefeld ist in diesem Fall in drei Bereiche I bis III unterteilt, nämlich einen inneren Bereich I um den Referenzpunkt 19, einen äußeren Bereich III an der Lesefeldgrenze $\Delta l$ und einen dazwischen liegenden mittleren Bereich II.

Die Auswertung von Positionsmesswerten $p_A$, $p_B$ ist dann davon abhängig, ob die ermittelten Abstände $\Delta d_A$, $d_A$ für eine Marke im inneren I, äußeren III oder Mittleren Bereich II liegen. Der reale Abstand $\Delta d$ ist in den Figuren 4a bis 4c eingezeichnet.

Figur 4a zeigt die Detektion einer Marke im inneren Bereich I. In diesem Fall wird, wenn die Betragsdifferenz in den Rechnereinheiten 12a, 12b ermittelten Positionsmesswerten $p_A$, $p_B$ den Schwellwert $t_{p,1}$ überschreitet, der sichere Zustand ausgegeben. Ansonsten wird der Mittelwert dieser Positionsmesswerte $p_A$, $p_B$ als Ausgabepositionsmesswert ausgegeben.

Figur 4b zeigt die Detektion einer Marke im mittleren Bereich II. In diesem Fall wird, wenn die Betragsdifferenz in den Rechnereinheiten 12a, 12b ermittelten Positionsmesswerten $p_A$, $p_B$ den Schwellwert $t_{p,1}$ überschreitet, der sichere Zustand ausgegeben. Ansonsten wird der Mittelwert dieser Positionsmesswerte $p_A$, $p_B$ als Ausgabepositionsmesswert ausgegeben.

Zusätzlich kann der optische Sensor 1 ein Warnsignal generieren, wenn eine der beiden Rechnereinheiten den Bereich II detektiert hat. Dieses Signal wird an eine externe Einheit ausgegeben und signalisiert, dass sich der Sensor seiner Lesefeldgrenze $\Delta l$ annähert.

Figur 4c zeigt die Detektion einer Marke im äußeren Bereich III. Für den Fall, dass die Betragsdifferenz der Positionsmesswerte $p_A$, $p_B$ den Schwellwert $t_{p,3}$ überschreitet, geht der optische Sensor 1 in den sicheren Zustand über. Im anderen Fall wird der Positionswert 0 ausgegeben. Zusätzlich kann der optische Sensor 1 ein weiteres Warnsignal generieren, wenn eine der beiden Rechnereinheiten den Bereich III detektiert hat. Dieses Signal wird an eine externe Einheit ausgegeben und signalisiert, dass sich der Sensor außerhalb seiner Lesefeldgrenze $\Delta l$ befindet. Insgesamt, wenn die beiden Rechnereinheiten unterschiedliche Bereiche detektieren, wird entsprechend den Gleichungen 3 und 4 verfahren.

Bezugszeichenliste

| (1) | Optische Sensor |
|---|---|
| (2) | Barcode |
| (3) | Lichtstrahl |
| (4) | Sender |
| (5) | Sendeoptik |
| (6) | Umlenkspiegel |
| (7) | Ablenkeinheit |
| (8) | Spiegelfläche |
| (9) | Empfangsoptik |
| (10) | Empfänger |
| (11) | Auswerteeinheit |
| (12a, b) | Rechnereinheit |
| (13a, b) | Eingangsschaltung |
| (14) | Datenverbindung |
| (15) | Sensoranordnung |
| (16) | Fahrzeug |
| (16a) | Steuerung |
| (17) | Positionsmaßsystem |
| (19) | Referenzpunkt |

| A | Abtastbereich |
|---|---|
| A' | Abtastlinie |
| $(\Delta d, \Delta d_A, \Delta d_B)$ | Abstand |
| $(\Delta l)$ | Lesefeldgrenze |
| $(p_A, p_B)$ | Positionsmesswerte |
| (I) | innerer Bereich |
| (II) | mittlerer Bereich |
| (III) | äußerer Bereich |

**Patentansprüche**

1. Sensoranordnung (15) mit einem von einer Anordnung von Marken gebildeten Positionsmaßsystem (17), wobei in jeder Marke deren Position innerhalb des Positionsmaßsystems (17) kodiert ist, und mit einem relativ zum Positionsmaßsystem (17) beweglich angeordneten optischen Sensor (1), welcher einen Lichtstrahlen (3) emittierenden Sender (4), einen Lichtstrahlen (3) empfangenden Empfänger (10) und eine Auswerteeinheit (11) zur Auswertung von Empfangssignalen des Empfängers (10) aufweist, wobei mit dem optischen Sensor (1) Marken innerhalb eines Lesefelds erfasst werden, wobei in der Auswerteeinheit (11) durch Erfassen einer in einer Marke kodierten Position und Erfassen der Lage der Marke innerhalb des Lesefelds ein Positionsmesswert generiert wird, **dadurch gekennzeichnet, dass** die Auswerteeinheit (11) zwei über eine Datenverbindung (14) verbundene Rechnereinheiten (12a, 12b) aufweist, dass das Empfangssignal jeder Rechnereinheit (12a, 12b) über eine Eingangsschaltung (13a, 13b) zugeführt wird, dass in jeder Rechnereinheit (12a, 12b) für eine erfasste Marke das Empfangssignal ausgewertet und daraus ein Positionsmesswert ($p_A$, $p_B$) bestimmt wird, dass eine Rechnereinheit (12a, 12b) deren Positionsmesswerte ($p_A$ oder $p_B$) an die andere Rechnereinheit (12b, 12a) sendet, in der die beiden Positionsmesswerte ($p_A$,

$p_B$) miteinander verglichen werden, dass bei Übereinstimmung der Positionsmesswerte ($p_A$, $p_B$) innerhalb einer vorgegebenen Toleranzgrenze der optische Sensor (1) einen gültigen Ausgabepositionsmesswert ausgibt und andernfalls der optische Sensor (1) in einen sicheren Zustand übergeht.

2. Sensoranordnung (15) nach Anspruch 1, **dadurch gekennzeichnet, dass** der optische Sensor (1) eine Ablenkeinheit (7) aufweist, mittels derer die Lichtstrahlen (3) periodisch innerhalb des Lesefelds geführt sind, und/oder dass in den Marken deren Absolutpositionen innerhalb des Positionsmaßsystems (17) kodiert sind.

3. Sensoranordnung (15) nach einem der Ansprüche 1 oder 2, **dadurch gekennzeichnet, dass** der optische Sensor (1) im sicheren Zustand eine Fehlermeldung ausgibt, das einen ungültigen Positionsmesswert ($p_A$, $p_B$) signalisiert.

4. Sensoranordnung (15) nach einem der Ansprüche 1 bis 3, **dadurch gekennzeichnet, dass** die Toleranzgrenze durch einen Schwellwert bestimmt ist, mit dem die Betragsdifferenz der beiden Positionsmesswerte ($p_A$, $p_B$) bewertet wird und/oder dass der Ausgabepositionsmesswert der arithmetische Mittelwert der Positionsmesswerte ($p_A$, $p_B$) oder einer der Positionsmesswerte ($p_A$, $p_B$) ist.

5. Sensoranordnung (15) nach einem der Ansprüche 1 bis 4, **dadurch gekennzeichnet, dass** das Lesefeld durch zwei beidseits eines Referenzpunkts (19) liegende Lesefeldgrenzen ($\Delta l$) begrenzt ist.

6. Sensoranordnung (15) nach Anspruch 5, **dadurch gekennzeichnet, dass** für die erfasste Marke in jeder Rechnereinheit (12a, 12b) deren Abstand ($\Delta d_A$, $\Delta d_B$) zum Referenzpunkt (19) bestimmt und als Kriterium für einen gültigen Ausgabepositionsmesswert herangezogen wird.

7. Sensoranordnung (15) nach einem der Ansprüche 5 und 6, **dadurch gekennzeichnet, dass** der optische Sensor (1) einen gültigen Ausgabepositionsmesswert ausgibt, wenn die Positionsmesswerte ($p_A$, $p_B$) innerhalb einer vorgegebenen Toleranzgrenze übereinstimmen und wenn wenigstens in einer Rechnereinheit (12a, 12b) die erfasste Marke innerhalb der Lesefeldgrenzen $\Delta l$ erkannt wird.

8. Sensoranordnung (15) nach Anspruch 7, **dadurch gekennzeichnet, dass** die Betragsdifferenz der Positionsmesswerte ($p_A$, $p_B$) mit einem die Toleranzgrenze bestimmenden Schwellwert bewertet wird, dessen Größe davon abhängt, ob in jeder Rechnereinheit (12a, 12b), nur in einer Rechnereinheit (12a, 12b) oder in keiner Rechnereinheit (12a, 12b) der Abstand ($\Delta d_A$ und $\Delta d_B$) innerhalb der Lesefeldgrenzen $\Delta l$ erkannt wird.

9. Sensoranordnung (15) nach Anspruch 8, **dadurch gekennzeichnet, dass** die Betragsdifferenz der Positionsmesswerte ($p_A$, $p_B$) mit einem kleinsten Schwellwert bewertet wird, wenn beide Abstände ($\Delta d_A$ und $\Delta d_B$) innerhalb der Lesefeldgrenzen $\Delta l$ liegen, dass die Betragsdifferenz der Positionsmesswerte ($p_A$, $p_B$) mit einem mittleren Schwellwert bewertet wird, wenn nur einer der Abstände ($\Delta d_A$ und $\Delta d_B$) innerhalb der Lesefeldgrenzen $\Delta l$ liegt, und dass die Betragsdifferenz der Positionsmesswerte ($p_A$, $p_B$) mit einem größten Schwellwert bewertet wird, wenn beide Abstände ($\Delta d_A$, $\Delta d_B$) außerhalb der Lesefeldgrenzen $\Delta l$ liegen.

10. Sensoranordnung (15) nach Anspruch 6, **dadurch gekennzeichnet, dass** die Abstände ($\Delta d_A$, $\Delta d_B$) in mehreren Klassen unterteilt sind, und dass durch den optischen Sensor (1) abhängig von der Zugehörigkeit der Abstände ($\Delta d_A$, $\Delta d_B$) zu einer Klasse unterschiedliche Auswertungen der Positionsmesswerte ($p_A$, $p_B$) durchgeführt werden.

11. Sensoranordnung (15) nach Anspruch 10, **dadurch gekennzeichnet, dass** in einem äußeren, über die Lesefeldgrenzen $\Delta l$ hinausgehenden Bereich der Abstände ($\Delta d_A$, $\Delta d_B$) der optische Sensor (1) in den sicheren Zustand übergeht, wenn die Betragsdifferenz der Positionsmesswerte ($p_A$, $p_B$) einen Schwellwert überschreitet.

12. Sensoranordnung (15) nach einem der Ansprüche 10 oder 11, **dadurch gekennzeichnet, dass** in einem mittleren, innerhalb der Lesefeldgrenzen $\Delta l$ liegenden Bereich der Abstände ($\Delta d_A$, $\Delta d_B$) der optische Sensor (1) ein Warnsignal generiert, wenn mindestens eine der beiden Rechnereinheiten den mittleren Bereich detektiert, und dass in einem äußeren, außerhalb der Lesefeldgrenzen liegenden Bereich der Abstände ($\Delta d_A$, $\Delta d_B$) der optische Sensor (1) ein weiteres Warnsignal generiert, wenn mindestens eine der beiden Rechnereinheiten den äußeren Bereich detektiert.

13. Sensoranordnung (15) nach einem der Ansprüche 1 bis 12, **dadurch gekennzeichnet, dass** die die Auswerteeinheit (11) bildenden Rechnereinheiten (12a, 12b) identisch sind.

14. Sensoranordnung (15) nach einem der Ansprüche 1 bis 13, **dadurch gekennzeichnet, dass** jede Rechnereinheit (12a, 12b) von einem DSP (Digital Signalprozessor) und/oder einem ARM (Advanced RISC Machine)-Prozessor gebildet ist.

15. Sensoranordnung (15) nach einem der Ansprüche 1 bis 14, **dadurch gekennzeichnet, dass** über die Datenverbindung (14) eine bidirektionale Datenübertragung zwischen den Rechnereinheiten (12a, 12b) erfolgt.

# Fig. 1

Fig. 2

Fig. 3

## Fig. 4a

## Fig. 4b

## Fig. 4c

Europäisches
Patentamt
European
Patent Office
Office européen
des brevets

## EUROPÄISCHER RECHERCHENBERICHT

Nummer der Anmeldung

EP 25 18 1332

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y<br><br>A | EP 4 403 881 A1 (LEUZE ELECTRONIC GMBH CO KG [DE]) 24. Juli 2024 (2024-07-24)<br>* Absätze [0018], [0033] - [0035] *<br>* Absatz [0046]; Abbildung 1 *<br>* Absatz [0053] - Absatz [0054]; Abbildung 2 *<br>* Absatz [0055] - Absatz [0057]; Abbildung 3 *<br>* Absätze [0063], [0064], [0069] *<br>----- | 1-7, 10-15<br>8,9 | INV.<br>G01D5/244<br>G01D5/347 |
| Y<br><br>A | EP 3 367 128 A1 (LEUZE ELECTRONIC GMBH CO KG [DE]) 29. August 2018 (2018-08-29)<br>* Absätze [0010], [0017] *<br>* Absatz [0030] - Absatz [0037]; Abbildung 1 *<br>* Absatz [0038]; Abbildung 2 *<br>----- | 1-7, 10-15<br>8,9 | |
| Y<br><br>A | DE 11 2011 105479 B4 (MITSUBISHI ELECTRIC CORP [JP]) 4. Juni 2020 (2020-06-04)<br>* Absatz [0008] - Absatz [0009] *<br>* Absätze [0013], [0016], [0017]; Abbildung 1 *<br>* Absatz [0025] - Absatz [0028] *<br>* Absätze [0030], [0034] *<br>----- | 1-7, 10-15<br>8,9 | |
| A | DE 10 2019 207549 A1 (VITESCO TECH GMBH [DE]) 26. November 2020 (2020-11-26)<br>* Absatz [0062] - Absatz [0068]; Abbildung 1 *<br>* Absatz [0084] - Absatz [0086] *<br>* Absatz [0091]; Abbildung 2 *<br>----- | 1 | |

RECHERCHIERTE SACHGEBIETE (IPC)

G01D
G01B
G05B
G06F

Der vorliegende Recherchenbericht wurde für alle Patentansprüche erstellt

| Recherchenort | Abschlußdatum der Recherche | Prüfer |
|---|---|---|
| München | 4. November 2025 | Jakob, Clemens |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 25 18 1332

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-11-2025

| Im Recherchenbericht angeführtes Patentdokument | Datum der Veröffentlichung | Mitglied(er) der Patentfamilie | Datum der Veröffentlichung |
|---|---|---|---|
| EP 4403881 A1 | 24-07-2024 | KEINE | |
| EP 3367128 A1 | 29-08-2018 | KEINE | |
| DE 112011105479 B4 | 04-06-2020 | CN 103703345 A | 02-04-2014 |
| | | DE 112011105479 T5 | 10-04-2014 |
| | | JP 5108165 B1 | 26-12-2012 |
| | | JP WO2013018168 A1 | 23-02-2015 |
| | | KR 20140036302 A | 25-03-2014 |
| | | TW 201305535 A | 01-02-2013 |
| | | US 2014091213 A1 | 03-04-2014 |
| | | WO 2013018168 A1 | 07-02-2013 |
| DE 102019207549 A1 | 26-11-2020 | DE 102019207549 A1 | 26-11-2020 |
| | | EP 3973251 A1 | 30-03-2022 |
| | | US 2022307932 A1 | 29-09-2022 |
| | | WO 2020234255 A1 | 26-11-2020 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10211779 B1

- DE 102005047658 A1